Europäisches Patentamt

European Patent Office

Office européen des brevets

(19)

(11) Publication number: **0 011 630**
**B1**

# EUROPEAN PATENT SPECIFICATION

(12)

(45) Date of publication of patent specification: **12.01.83**

(21) Application number: **79900333.0**

(22) Date of filing: **21.03.79**

(86) International application number:
**PCT/DK79/00010**

(87) International publication number:
**WO 79/00810 18.10.79 Gazette 79/21**

(51) Int. Cl.³: **A 01 G 25/09,**
**B 65 H 75/00**

(54) **A SELF-PROPELLED IRRIGATOR.**

(30) Priority: **22.03.78 DK 1321/78**
**06.06.78 DK 2509/78**

(43) Date of publication of application:
**11.06.80 Bulletin 80/12**

(45) Publication of the grant of the patent:
**12.01.83 Bulletin 83/2**

(84) Designated Contracting States:
**FR**

(56) References cited:
**DE - C - 215 616**
**DE - C - 294 358**
**DK - B - 132 734**
**US - A - 1 507 506**

(73) Proprietor: GRONLYKKE, Sven
Logismose Gods
DK-5683 Harby, Funen (DK)

(72) Inventor: GRONLYKKE, Sven
Logismose Gods
DK-5683 Harby, Funen (DK)

(74) Representative: Lavoix, Jean et al,
c/o Cabinet Lavoix 2, Place D'Estienne D'Orves
F-75441 Paris Cedex 09 (FR)

Courier Press, Leamington Spa, England.

## A self-propelled irrigator

The present invention relates to a self-propelled irrigator for irrigation of row crops, lawns, and the like areas, and comprising a hose wound up on a reel, water from a stationary tap flowing through said hose to a nozzle unit such as a sprinkler and to an outlet through a driving wheel comprising containers along its periphery, said containers being supplied with water when they are in an uppermost position in front of the vertical, diametral plane of the wheel and releasing water during the movement past their lowest position.

DE—C—215,616 discloses an irrigator comprising a water distributing pipe situated between two driving wheels. Along the periphery these driving wheels comprise tiltable cups which are suplied with water when they are in their uppermost position and emptied when they hit a stop in their lowest position and thereby tilt. These known cups are therefore only filled with water when they are in a particular uppermost position, which, especially when the apparatus is being started, involves an insufficient or no propellant moment. Furthermore, the mechanical tilting of the cups in their lowest position involves a sudden emptying which does not provide a necessary braking effect when the apparatus moves downhill. Consequently, the apparatus moves forwards at an uncontrollable speed, to which must be added that these tiltable cups are expensive to manufacture and to keep in repair.

DE—C—294,358 discloses an irrigator having a coaxial hose reel on which reel is wound a hose which supplies at one end an outlet of the irrigator with water from a stationary tap which is connected to the opposite end of the hose. The latter is wound round the reel in the same direction as the direction of rotation of the ground wheels and reel in the direction of travel of the irrigator in use. In this way, the hose is automatically wound on the reel (and is of course unwound in the opposite direction of travel). The hose reel is freely rotatable when the irrigator travels forward and is coupled to the ground wheel by gearing when the irrigator travels rearward toward the water tap at the end of the hose.

U.S.A. 1,507,506 discloses a self-propelled irrigator comprising containers disposed along the periphery of the driving wheel. These containers are supplied with water from a pipe outlet when the containers are in their uppermost position in front of the vertical, diametral plane of the wheel and release the water during their movement past their lowest position. Grooved wheels coaxial with the driving wheel are driven by the latter when the irrigator is in use and travels forwardly. Ropes are wound round these grooved wheels and anchored on the ground at their other ends. Thus, when the driving wheel and grooved wheels rotate, the irrigator is drawn along by the pulling effect on the anchored ropes. The grooved wheels rotate freely relative to the driving wheel in the opposite direction of rotation.

The object of the invention is to provide an irrigator which is much simpler, cheaper and more compact than the irrigator of the prior art in that the reel for winding the hose, the ground wheels and the driving wheel including the water chambers are combined into a single constructional unit.

The invention provides a self-propelled irrigator for irrigation of crop rows, lawns and like areas, comprising a rotational ring of containers forming a driving wheel, said containers being supplied with water from a water outlet of the irrigator provided above the containers and filling each container when it is in a uppermost position, the water being released during the movement of the filled containers past their lowest position, characterised in that the ring of containers are axially defined by two end walls forming two ground wheels which are fixed to a coaxial hose reel on which reel is wound a hose which unwinds when the irrigator moves toward and which supplies at one end said outlet with water from a stationary tap which is connected to the opposite end of the hose, and that said containers are formed by chambers within the reel, said chambers being defined by the said end walls of the reel and by substantially radial blades extending from one of said end walls to the other and spaced apart in a circumferential direction of the reel.

In a simple and inexpensive embodiment of the apparatus according to the invention, the driving wheel itself forms the reel.

In a preferred embodiment, the portion of the reel on which the hose is wound is surrounded by a cylindrical jacket protecting the chambers between the radial blades against fouling. This cylindrical jacket may be radially spaced from the radially outer ends of the blades so that the water can flow quickly from one chamber to the other and the chambers are also easily cleaned by the rinsing effect of the water.

The invention will be described below with reference to the accompanying drawings, in which:

Fig. 1 is an axial sectional view of one embodiment of the irrigator according to the invention;

Fig. 2 is a sectional view to an anlarged scale taken on line II—II of Fig. 1;

Fig. 3 is a perspective view of a second embodiment of the irrigator according to the invention, and

Fig. 4 is a sectional view taken on line IV—IV of Fig. 3 of a modification.

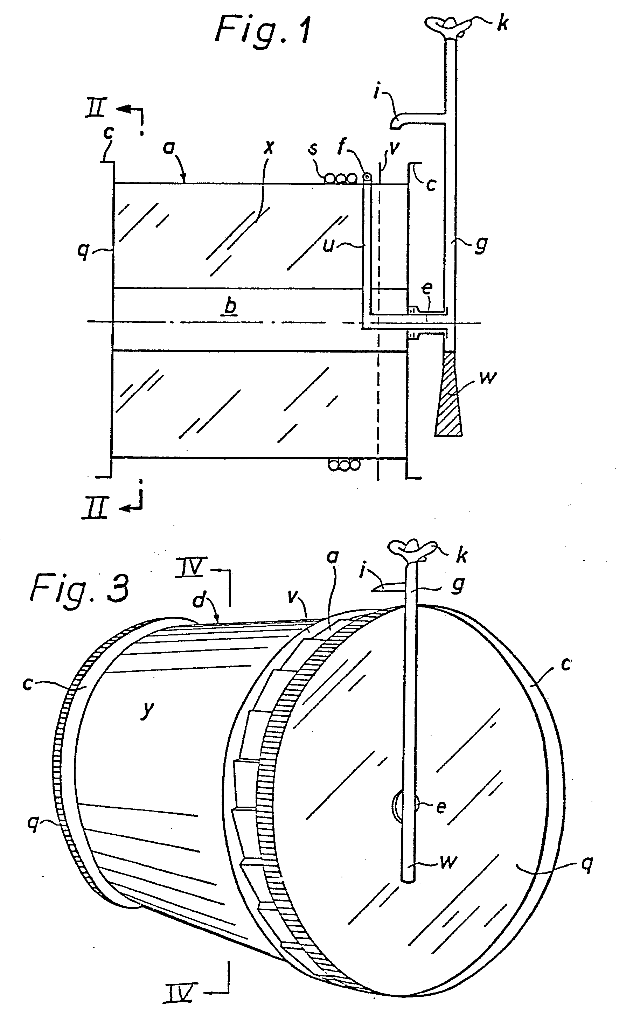

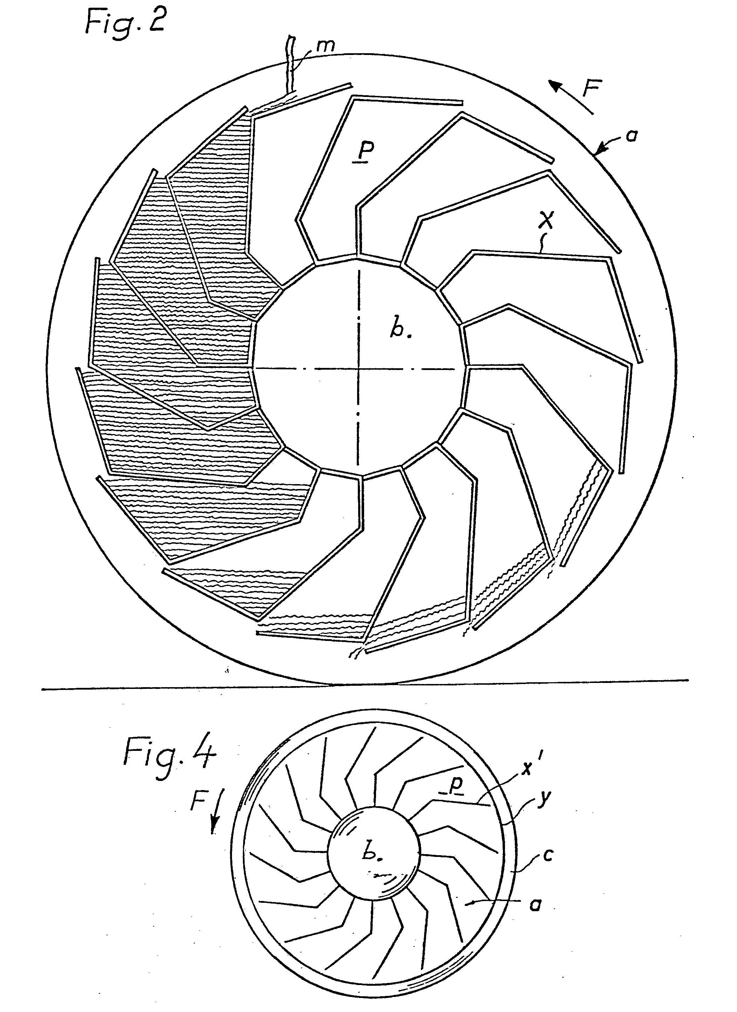

Figs. 1 and 2 show an irrigator comprising a driving wheel $a$ formed by a hollow wheel axle $b$, two end walls $q$ and axially extending, angularly evenly spaced apart paddle blades *x* which define chambers *p*. The latter extend axially from one end wall *q* to the other.

The end walls *q* extend radially beyond the radially outer edges of the blades *x* and are provided with a circular flange *c* which is adapted to roll along the ground in operation of the irrigator.

A water supply pipe *u* has a portion extending axially through the hollow axle *b* and a branch which extends radially between two blades *x* and terminates in a hose connector *f*. A hose *s* (partly shown in Fig. 1) is wound round the blades *x* of the driving wheel *a* which also performs the function of a hose reel. This hose is connected to the connector *f* at one end and connected to a fixed water supply tap (not shown) at its opposite end. This tap is located at the end of the area of ground to be irrigated. Such taps may be connected at intervals of for example 20 metres to a pipe which is located at the end of a lawn or field whose crops must be sprayed.

Mounted on the axially extending portion of the water supply pipe *u* by means of a swivel coupling *e* is a vertical pipe *g* which terminates in an upper sprinkler *k* for sprinkling water over the ground. A branch pipe is connected to the pipe *g* between the swivel coupling *e* and the sprinkler. This branch pipe extends beyond the end wall *c* of the driving wheel *a* as shown in Fig. 1 and terminates in an outlet *i* which is located in a position in front of the vertical diametral plane of the driving wheel *a* so that the water which issues from the outlet *i* falls in a stream *m* onto the uppermost blade *x* as shown in Fig. 2.

It will be understood that the water supplied to the hose *s* wound round the wheel *a* flows through the pipes *u* and *g* and issues from the sprinkler *k* and is sprayed over the lawn or field. The water also flows through the branch pipe below the sprinkler *k* and issues from the outlet *i* in the form of a stream *m* (Fig. 2) and fills the uppermost chamber following on the stream *m*, after which the water in this uppermost chamber overflows into the next lower chamber, and so on, until the chambers on the left side of the axle *b* as viewed in Fig. 2 are filled. The weight of the water in these front chambers causes the driving wheel to rotate in the direction of arrow F in the known manner. As the driving wheel *a* rotates and ground wheels *c* roll over the ground, the irrigator travels over the latter in a direction away from the fixed tap located at one end of the lawn or field. In the course of the rotation of the wheel *a*, the water in the lowermost chambers *p* starts to flow out, as illustrated in Fig. 2. The blades *x* are curved backwards with respect to the direction of rotation of the wheel *a* and form radially outermost guiding portions for guiding the overflowing water forwardly of the axis of rotation of the wheel into the subjacent chamber in the front part of the wheel extending substantially down to the horizontal diametral plane of the wheel.

Note that the hose *s* is wound round the edges of the blades *x* (acting as a reel) in the direction of rotation of the reel. Consequently, the connector *f* faces in this direction of rotation and the hose *s* automatically unwinds from the bottom of the reel as the irrigator travels forwardly away from the tap fixed at the starting end of the lawn or field.

In order to ensure that the sprinkler *k* remains in its uppermost position, the pipe *g* is held constantly vertical by the effect of a weighted end *w* of the pipe *g*. Alternatively, the pipe *g* may be held vertical by a branch which extends the pipe *g* downwardly and forwardly of the swivel *w* and bears on the ground, in front of the swivel *w*, through a roller.

A flange or collar *v* is mounted on the radially outer edges of the blades *x* in a position in the vicinity of, but spaced from, the end wall *q* adjacent the pipe *g*. The annular groove thus defined between the end wall *q* and the flange *v* ensures that the hose *s* does not prevent the water stream *m* issuing from the outlet *i* from entering the chambers *p*.

Fig. 3 shows another embodiment of the irrigator according to the invention. Component elements of this embodiment which are similar to those of the embodiment shown in Figs. 1 and 2 carry the same reference characters and need not be described again.

The feature of the irrigator shown in Fig. 3 is that the driving wheel *a* is surrounded by a cylindrical jacket *y* which is fixed to the end walls *q* and protects the chambers *p* against fouling e.g. with earth. Fig. 4 shows that an annular gap is left between the radially outer edges of the paddle blades *x* and this jacket *y* so that the water can flow quickly from one chamber *p* to the other and the chambers are also easily cleaned by the rinsing effect of the water. The annular groove defined between the flange *v* and the end wall *q* exposes the end of the driving wheel *a* for receiving the water from the outlet *i*.

It will be understood that a hose *s* (not shown) is wound round the jacket *y* (which acts as a hose reel) and is connected to a connector *f* (not shown). This connector *f* communicates with the pipe *g*. The hose *s* is automatically unwound from under the reel formed by the jacket *y* as the wheel *a* rotates in the direction of arrow F (Fig. 4) in the manner described hereinbefore in respect of the embodiment of Figs. 1 and 2.

If desired, two flanges *v* may be provided to form two annular grooves with the respective end walls *q* for receiving the water from two outlets *i* placed at both ends of the wheel *a*.

Although the irrigator as illustrated in Fig. 3 has paddle blades of the type shown in Fig. 2, it must be understood that the paddle blades of the driving wheel *a* of either embodiment may be of some other type. By way of example, Fig.

4 shows a possible modification of the shape of the paddle blades x'.

**Claims**

1. A self-propelled irrigator for irrigation of crop rows, lawns and like areas, comprising a rotational ring of containers (p) forming a driving wheel (a), said containers being supplied with water from a water outlet (i) of the irrigator provided above the containers and filling each container when it is in an uppermost position, the water being released during the movement of the filled containers past their lowest position, characterised in that the ring of containers (p) are axially defined by two end walls (q) forming two ground wheels (c) which are fixed to a coaxial hose reel (d) on which reel is wound a hose (s) which unwinds when the irrigator moves forward and which supplies at one end said outlet (i) with water from a stationary tap which is connected to the opposite end of the hose, and that said containers are formed by chambers (p) within the reel (d), said chambers being defined by the said end walls (q) of the reel and by substantially radial blades (x) extending from one of said end walls (q) to the other and spaced apart in a circumferential direction of the reel (d).

2. An irrigator as claimed in claim 1, characterised in that the blades (x) are curved backwards with respect to the direction of rotation of the reel (d) and form radially outermost guiding portions for guiding in the front part of the reel the overflowing water forwardly of the reel and into the subjacent chamber.

3. An irrigator as claimed in claim 1, characterised in that said end walls (q) are circular and are provided with edge portions (c) projecting radially beyond the reel (d) and forming the said ground wheels.

4. An irrigator as claimed in claim 3, characterised in that a least one of said edge portions together with an additional radial flange (v) on the reel define an annular groove located under the water outlet (i), said groove communicating freely with the chambers (p) of the hose reel (d).

5. An irrigator as claimed in claim 4, characterised in that the blades (x) are surrounded by a cylindrical jacket (d) forming a hose-receiving surface of the reel adjacent the water-receiving groove.

6. An irrigator as claimed in claim 5, characterised in that the cylindrical jacket (d) is radially spaced from the radially outer ends of the blades (x).

**Revendications**

1. Arroseuse auto-propulsée, pour l'arrosage de rangs de culture, de pelouses et de zones semblables, comprenant un anneau rotatif de récipients (p) formant une roue motrice (a), lesdits récipients étant alimentés en eau provenant d'un orifice de sortie (i) de l'arroseuse prévu au-dessus des récipients et remplissant chaque récipient lorsqu'il est dans une position la plus haute, l'eau étant déchargée pendant le déplacement des récipients remplis au-delà de leur position la plus basse, caractérisée en ce que l'anneau de récipients (p) est axialement délimité par deux parois d'extrémité (q) formant deux roues porteuses (c) qui sont fixées à un dévidoir (d) à tuyau coaxial, dévidoir sur lequel est enroulé un tuyau (s) qui se déroule lorsque l'arroseuse se déplace vers l'avant et qui alimente, à une extrémité, ledit orifice de sortie (i), en eau provenant d'un robinet fixe qui est branché à l'extrémité opposée du tuyau, et en ce que lesdits récipients sont formés par des chambres (p) situées à l'intérieur du dévidoir (d), lesdites chambres étant délimitées par lesdites parois d'extrémité (q) du dévidoir et par des pales (x) sensiblement radiales s'étendant à partir d'une desdites parois d'extrémité (q) jusqu'à l'autre et espacées les unes des autres dans une direction circonférentielle du dévidoir (d).

2. Arroseuse selon la revendication 1, caractérisée en ce que les pales (x) sont incurvées vers l'arrière par rapport au sens de rotation du dévidoir (d), et forment des parties de guidage radialement les plus extérieures pour guider dans la partie avant du dévidoir l'eau qui déborde vers l'avant du dévidoir et dans la chambre sousjacente.

3. Arroseuse selon la revendication 1, caractérisée en ce que lesdites parois d'extrémité (q) sont circulaires et sont munies de parties de bord (c) qui font saillie radialement au-delà du dévidoir (d) et forment lesdites roues porteuses.

4. Arroseuse selon la revendication 3, caractérisée en ce qu'au moins l'une desdites parties de bord en combinaison avec une collerette radiale supplémentaire (v) portée par le dévidoir, forme une gorge annulaire disposée au-dessous de l'orifice (i) de sortie d'eau, ladite gorge communiquant librement avec les chambres (p) du dévidoir (d) à tuyau.

5. Arroseuse selon la revendication 4, caractérisée en ce que les pales (x) sont entourées par une chemise cylindrique (d) formant une surface de réception de tuyau du dévidoir adjacente à la gorge de réception d'eau.

6. Arroseuse selon la revendication 5, caractérisée en ce que la chemise cylindrique (d) est radialement espacée des extrémités radialement extérieures des pales (x).

**Patentansprüche**

1. Eine selbstfahrende Berieselungsvorrichtung zum Beregnen von in Reihen angebauten Pflanzen, Rasenflächen und dergleichen mit einem rotierenden Ring von Behältern (p), die ein Antriebsrad (a) bilden, und die mit Wasser von einem Auslaß der Berieselungsvorrichtung versehen werden, welcher Auslaß über den Behältern vorgesehen ist und jeden Behälter füllt, wenn er in seiner höchsten Stellung ist, wobei das Wasser während der Bewegung der gefüllten Behälter an ihrer untersten Stellung vorbei abgegeben wird, dadurch gekennzeichnet, daß der Ring von Behältern (p) in axialer Richtung durch zwei Endwände (q) abgegrenzt ist, die zwei an einer koaxialen Schlauchtrommel (d) befestigten Bodenlaufräder bilden, wobei ein Schlauch (s) auf dieser Trommel aufgewickelt ist und sich abwickelt wenn die Berieselungsvorrichtung sich vorwärts bewegt, und wobei dieser Schlauch am einen Ende den Auslaß (i) mit Wasser von einer stationären Wasser-Zapfstelle zurführt, die mit dem anderen Ende des Schlauches verbunden ist, und daß die Behälter durch Kammern (p) innerhalb der Trommel (d) gebildet werden, wobei diese Kammern durch die obige Endwände (q) der Trommel und durch hauptsächlich radiale Blätter (x) abgegrenzt werden, die sich von der einen dieser Endwände (q) zur anderen in Abstand voneinander in der peripherischen Richtung der Trommel (d) erstrecken.

2. Eine Berieselungsvorrichtung nach Anspruch 1, dadurch gekennzeichnet, daß die Blätter (x) nach hinten im Verhältnis zur Rotationsrichtung der Trommel (d) gekrümmt sind und radiale äußere Steuerabschnitte zum Leiten des überfließenden Wassers vorwärts in den Vorderteil der Trommel und in die darunterliegende Kammer, bilden.

3. Eine Berieselungsvorrichtung nach Anspruch 1, dadurch gekennzeichnet, daß die Endwände (q) kreisförmig und mit Kantflächen (c) versehen sind, die sich radial über die Trommel (d) zum Bilden der Bodenlaufräder hinausragen.

4. Eine Berieselungsvorrichtung nach Anspruch 33, dadurch gekennzeichnet, daß mindestens eine der Kantflächen zusammen mit einem weiteren radialen Flansch (v) auf der Trommel eine ringförmige Aussparung abgrenzt, die unter dem Wasserauslaß (i) angeordnet ist und mit den Kammern (p) der Schlauchtrommel (d) in freier Verbindung steht.

5. Eine Berieselungsvorrichtung nach Anspruch 4, dadurch gekennzeichnet, daß die Blätter (x) von einem zylindrischen Mantel (d) umgeben sind, der eine schlauchaufnehmende Oberfläche der Trommel in der Nähe der wasseraufnehmenden Aussparung bildet.

6. Eine Berieselungsvorrichtung nach Anspruch 5, dadurch gekennzeichnet, daß der zylindrische Mantel (d) in radialem Abstand von den radial äußeren Enden der Blätter (x) vorgesehen ist.

0011 630

Fig.1

Fig.3

1

Fig. 2

Fig. 4